(19) **Europäisches Patentamt**
**European Patent Office**
**Office européen des brevets**

(11) **EP 1 517 739 B1**

(12) **EUROPEAN PATENT SPECIFICATION**

(45) Date of publication and mention
of the grant of the patent:
**24.06.2009 Bulletin 2009/26**

(51) Int Cl.:
**B01D 53/56** *(2006.01)*  **B01D 53/79** *(2006.01)*

(21) Application number: **03816941.3**

(22) Date of filing: **09.05.2003**

(86) International application number:
**PCT/US2003/014655**

(87) International publication number:
**WO 2005/009594 (03.02.2005 Gazette 2005/05)**

(54) **SELECTIVE NON-CATALYTIC REDUCTION OF NOx**

SELEKTIVE NICHTKATALYTISCHE REDUKTION VON NOx

REDUCTION NON CATALYTIQUE SELECTIVE DE NOx

(84) Designated Contracting States:
**AT BE BG CH CY CZ DE DK EE ES FI FR GB GR HU IE IT LI LU MC NL PT RO SE SI SK TR**

(30) Priority: **05.06.2002 US 386560**
**05.06.2002 US 386492**
**24.01.2003 US 442268**

(43) Date of publication of application:
**30.03.2005 Bulletin 2005/13**

(73) Proprietor: **ExxonMobil Research and Engineering Company**
**Annandale NJ 08801-0900 (US)**

(72) Inventors:
• **HURST, Boyd, E.**
**Humble, TX 77346 (US)**

• **McLAUGLIN, William, J.**
**Houston, TX 77098 (US)**
• **KNIGHT, David, G.**
**Houston Texas 77062 (US)**
• **HOCHHALTER Theresa, J.**
**Annandale Virginia 22003 (US)**

(74) Representative: **Dew, Melvyn John et al**
**ExxonMobil Chemical Patents Inc.,**
**P.O. Box 105**
**1830 Machelen (BE)**

(56) References cited:
**US-A- 3 900 554**   **US-A- 4 115 515**
**US-A- 4 208 386**   **US-A- 5 443 805**
**US-B1- 6 348 178**

**Description**

## FIELD OF THE INVENTION

The present invention relates to a non-catalytic process for reducing $NO_x$ concentrations in process streams. More particularly, the present invention relates to the injection of a reducing agent in combination with a readily-oxidizable gas to reduce $NO_x$ emissions in process stream effluents.

## BACKGROUND OF THE INVENTION

Increasingly stringent government regulatory emission standards have forced refiners to explore, and in some cases to implement, improved technologies for reducing the concentration of nitrogen oxides ($NO_x$) in emissions from combustion and production effluent streams. For example, it is known in the art to reduce $NO_x$ concentrations in combustion effluent streams by the injection of ammonia, and one such patent covering this technology is United States Patent Number 3,900,554 to Lyon. After this Lyon patent, there was a proliferation of patents and publications relating to the injection of ammonia into combustion effluent streams in order to reduce the concentration of $NO_x$. Such patents include United States Patent Numbers 4,507,269, Dean et al., and 4,115,515, Tenner et al. Other patents disclose the use of ammonia injection based on the use of kinetic modeling to determine the amount of ammonia to be injected. Such patents include United States Patent Numbers 4,636,370, 4,624,840, and 4,682,468, all to Dean et al. There have also been a number of patents and publications relating to the injection of urea into combustion effluent streams in order to reduce the concentration of $NO_x$. One such patent covering this technology is United States Patent Number 4,208,386 to Arand et al. A study by Kim and Lee (1996), published in the Journal of Chemical Engineering of Japan, shows that urea dissociates to ammonia and cyanuric acid (HNCO) and that both of these act as reducing agents for NO in two interrelated chains of free radical reactions.

However, effluents released from process streams remain a source of $NO_x$. One particularly troublesome $NO_x$ pollutant found in many process effluent streams is $NO_2$, a major irritant in smog. It is believed that $NO_2$ undergoes a series of reactions known as photo-chemical smog formation in the presence of sunlight and hydrocarbons.

Examples of such process streams that are a source of $NO_x$ include the effluent stream from the regenerator of a fluidized catalytic cracking unit (FCCU), and a carbon monoxide combustion/heat recovery unit (COHRU) used in conjunction with a FCCU. One major source of $NO_x$ in regenerator effluent results form the burning of carbon deposits from the spent catalyst. However, it is difficult to burn the carbon deposits from a spent catalyst without generating $NO_x$ in the off-gas. $NO_x$ produced in the regenerator and present in the off-gas is typically passed to the COHRU, which converts CO in the FCCU regenerator off-gas to $CO_2$ and other products such as water and/or steam. As the COHRU converts CO to $CO_2$ and other products, the effluent emitted into the atmosphere also contains $NO_x$. It is difficult to reduce the $NO_x$ concentrations in these streams by thermal means, partially because of the low temperatures of these process streams. Some catalyst fines may also be present in the regenerator off-gas. The effect of catalyst fines on $NO_x$ reduction was demonstrated at temperatures below 454°C (850°F) in U.S. Patent Number 4,434,147. The '147 patent describes a process in which ammonia and FCCU regenerator off-gas are cooled, then passed through a bed of FCCU catalyst fines created by collecting the fines on specially adapted electrostatic precipitator plates.

Hydrogen injection has been utilized in the past to enable the non-catalytic, ammonia-based, $NO_x$ reduction process to be more effective with lower temperature combustion effluent streams. While hydrogen injection has been used before with ammonia to reduce NOx in low temperature combustion streams, the amount of $NO_x$ released to the atmosphere is still too high for more stringent environmental regulations. Therefore, there exists a need in the art for improved methods of reducing the emission of $NO_x$ in refinery process streams by non-catalytic means. Thus, the inventors herein propose that a reduction in $NO_x$ emissions can be achieved by reducing the concentration of $NO_x$ in process streams such as, for example, the regenerator off-gas before it is conducted to the COHRU.

## SUMMARY OF THE INVENTION

The presently disclosed invention provides a non-catalytic process for reducing the $NO_x$ concentration in the regenerator off-gas stream of a fluidized catalytic cracking unit comprising:

a) forming a mixture of a reducing agent selected from ammonia, urea and mixtures thereof, and a readily-oxidizable gas in effective amounts that will result in the reduction of the $NO_x$ concentration of said regenerator off-gas stream by a predetermined amount; and
b) injecting said mixture into said off-gas stream at a point wherein said regenerator off-gas stream is at a temperature below about 871°C (1600°F).

In another embodiment of the present invention, an effective amount of reducing agent and readily-oxidizable gas are injected into an existing FCC process unit regenerator overhead line at a point upstream of the FCCU's heat recovery device.

In another embodiment of the present invention, an effective amount of reducing agent and readily-oxidizable gas are simultaneously injected into an existing FCC process unit regenerator overhead line at multiple locations upstream of the FCCU's heat recovery device.

In yet another embodiment of the present invention, the readily-oxidizable gas is hydrogen and the reducing agent is ammonia.

## BRIEF DESCRIPTION OF THE FIGURES

Figure 1 shows a plot of the data obtained as a result of the application of the present process with the injection of ammonia and hydrogen at a single location into the regenerator off-gas of a commercial fluidized catalytic cracking unit.

Figure 2 shows a plot of the data obtained as a result of the application of the present process with injection of ammonia and hydrogen at multiple locations to the regenerator off-gas of a commercial fluidized catalytic cracking unit.

## DETAILED DESCRIPTION OF THE PRESENT INVENTION

As used herein, the reference to $NO_x$, or nitrogen oxide(s) refers to the various oxides of nitrogen that are present in the off gas of the regenerator of a fluidized catalytic cracking unit. Thus, the terms refer to all of the various oxides of nitrogen including nitric oxide (NO), nitrogen dioxide ($NO_2$), nitrous oxide ($N_2O$), for example, and mixtures thereof.

Mixing, as used herein when describing the mixing of the reducing agent and readily-oxidizable gas, is meant to refer to the broadest meaning given the term. Thus, mixing refers to the objective of maximizing the local contact of the reducing agent and readily-oxidizable gas with the $NO_x$ in the off-gas stream at the desired molar ratios. Any suitable mixing techniques can be employed to achieve this end. These techniques include, but are not limited to, using a carrier gas with the reducing agent and/or readily-oxidizable gas to encourage more homogenous mixing; injecting a premixed stream of a reducing agent, readily-oxidizable gas and carrier gas into the off-gas stream; or, injecting a stream of reducing agent and carrier gas and a stream of readily-oxidizable gas and carrier gas into the off-gas stream separately.

Non-limiting examples of suitable pre-injection mixing techniques, processes or means include piping the reducing agent, readily-oxidizable gas and carrier gas through separate lines into one common vessel or into the injection line to the off-gas stream to be treated, allowing the two reagents and the carrier to mix as they flow towards the injection point.

The present invention is a non-catalytic process that uses an effective amount of a reducing agent injected with an effective amount of a readily-oxidizable gas to reduce the $NO_x$ concentration of the off-gas stream by a predetermined amount. By a predetermined amount it is meant a reduction of $NO_x$ by more than about 30% by volume, preferably more than about 50% by volume, and more preferably a reduction of more an about 70% by volume, based on the total volume of $NO_x$ present in the off-gas stream. In a most preferred embodiment, the predetermined reduction of $NO_x$ is at least that amount sufficient to meet governmental regulatory emission standards.

The present process is suitable for treating the regenerator off-gas of a fluidized catalytic cracking unit containing $NO_x$ and greater than about 0.1 vol.% oxygen, based on the volume of the stream. Preferably the off-gas stream will contain about 0.4 to about 1.5 vol.% oxygen.

Fluidized catalytic cracking is an important and widely used refinery process. The catalytic cracking process typically converts heavy oils into lighter products such as gasoline. In the fluidized catalytic cracking (FCC) process, an inventory of particulate catalyst is continuously cycled between a cracking reactor and a catalyst regenerator. Average reactor temperatures are in the range of about 482-538°C (900-1000°F), with average feed temperatures from about 260-427°C (500-800°F). The reactor and the regenerator together provide the primary components of the catalytic cracking unit. FCC process units are well known in the art and United States Patent Number 5,846,403, Swan, et al. provides a more detailed discussion of such a unit.

The regenerator is especially important to catalyst life and effectiveness because during the fluidized catalytic cracking process, carbonaceous deposits (coke) are formed on the catalyst, which substantially decrease its activity. The catalyst is then typically regenerated to regain its effectiveness by burning off at least a portion of the coke in the regenerator. This is typically done by injecting air, or another gas having a combustible amount of oxygen, into the regenerator at a rate sufficient to fluidize the spent catalyst particles. A portion of the coke contained on the catalyst particles is combusted in the regenerator, resulting in regenerated catalyst particles. Typical regenerator temperatures range from 566-788°C (about 1050°F to about 1450°F), while exit temperatures of the regenerator off-gas usually range from 649-816°C (about 1200°F to about 1500°F).

After regeneration, the catalyst particles are cycled back to the reactor. The regenerator off-gas is usually passed to further processes such as heat recovery devices, particulate removal devices, and carbon monoxide combustion/heat recovery units (COHRU), which, as previously mentioned, are designed to convert CO to $CO_2$ and recover available fuel energy.

Unfortunately, it is difficult to burn a substantial amount of coke from the catalyst in the regenerator without increasing the $NO_x$ content of the resulting off-gas. Therefore, the regenerator off-gas will typically contain nitrogen oxides ($NO_x$), catalyst fines, sulfur oxides ($SO_x$), carbon dioxide, carbon monoxide, and other compounds formed during the combustion of at least a portion of the coke from the catalyst particles. Of the nitrogen oxides present in the regenerator off-gas, nitric oxide (NO) typically makes up the majority of all $NO_x$ present. NO will usually represent about 90% in the regenerator off-gas. Therefore, the presently claimed process is especially concerned with the reduction and control of NO.

**[0021]** It is preferred to operate the regenerator in full bum mode to bum coke from the catalyst. During full-burn mode, the regenerator off-gas composition is generally about 0.6-1.5 vol.% oxygen, about 15-20 vol.% water, about 50 to about 200 parts per million by volume (vppm) NO, about 20-50 vppm CO, about 500-1000 vppm $SO_2$ with the balance being $N_2$ and $CO_2$.

Concentrations of $NO_x$ in process streams can be reduced by up to about 90% by volume or more through the use of the present non-catalytic $NO_x$ reduction process. This is well within the desired reduction range described above. The only commercially available technology to achieve such a level of reduction is technology based on the use of a catalytic process, which is significantly more expensive when compared to the present non-catalytic process.

The resent invention, however, achieves $NO_x$ reductions in low temperature off-gas streams comparable to those achieved through catalytic processes by the injection of a reducing agent. The off-gas streams treated with the presently claimed process also typically have low concentrations of oxygen, necessitating the use of a readily-oxidizable gas being injected with the reducing agent.

Reducing agents suitable for use in the presently claimed invention include urea, ammonia, and mixtures thereof. The preferred reducing agent is ammonia. Readily-oxidizable gases suited for use in the present process include paraffinic, olefinic and aromatic hydrocarbons and mixtures thereof such as, for example, gasoline and fuel oil, oxygenated hydrocarbons including formic and oxalic acids, nitrogenated hydrocarbons, sulfonated hydrocarbons, carbon monoxide, and hydrogen. Hydrogen is the preferred readily-oxidizable gas since it is not itself an air pollutant and cannot yield an air pollutant by incomplete oxidation.

By injection, it is meant that the mixture of the readily-oxidizable ga and reducing agent is conducted or introduced into the $NO_x$ containing off-gas stream to be treated. The injection of the reducing agent and readily-oxidizable gas can be by any suitable means known in the art. The injection means chosen is not critical to the present invention as long as it is one that effectively introduces the reducing agent and readily-oxidizable gas into the off-gas stream.

An effective amount of reducing agent used herein is based on the amount of $NO_x$ that is to be reduced. The amount of reducing agent used will typically range from about 0.5-12 moles of reducing agent per mole of $NO_x$, preferably about 0.5-8 moles of reducing agent per mole of $NO_x$. It is more preferred to use about 1-4 moles of reducing agent per mole of $NO_x$. The measurement of the concentration of $NO_x$ in the regenerator off-gases may be achieved by any suitable method known in the art, and the method chosen is not critical to the process presently claimed.

It is believed that a complex chain of free radical reactions achieves the non-catalytic reduction of $NO_x$ with the present reducing agent and readily-oxidizable gas. Not wanting to be limited by theory, the inventors herein believe the overall effect can be illustrated by the following two competing reactions:

$$\text{Equation 1: } NO + NH_3 + O_2 \rightarrow N_2 + H_2O \text{ (reduction)}$$

$$\text{Equation 2: } NH_3 + O_2 \rightarrow NO + H_2O \text{ (oxidation)}$$

The use of urea as the reducing agent introduces cyanuric acid (HNCO) as well as ammonia to the process. As demonstrated in the work of Lee and Kim (1996), cyanuric acid acts as a reducing agent for NO and also interacts with the $NO-NH_3-O_2$ chemistry summarized in Equations 1 and 2. Although the cyanuric acid reduction process is not thoroughly understood, and not wishing to be limited by theory, the inventors hereof believe that the dissociation of one mole of urea liberates one mole of ammonia and one mole of cyanuric acid. Experimental data from the Kim and Lee study (1996) suggests that cyanuric acid stoichiometrically reduces NO to elemental nitrogen and water at a molar ratio with NO of 1:1. Thus, urea should generally be used at a molar ratio to NO that is roughly one half the effective molar ratio for ammonia.

The reduction reaction of Equation 1 dominates in the 871-1093°C (1600°F-2000°F) temperature range. Above 1093°C (2000°F), the reaction of Equation 2 becomes more prevalent. Thus, in the practice of the present invention, it is desirable to operate at temperatures below about 1093°C (2000°F). However, operating temperatures lower than about 871°C (1600°F) are achievable with the reduction reaction still being dominated by Equation 1 through the use of the present invention. The inventors hereof have unexpectedly found that, at temperatures below about 871°C (1600°F) the reduction reaction of Equation 1 will not effectively reduce $NO_x$ without the injection of a readily-oxidizable gas, such as hydrogen. It should be noted that as the temperature of the process stream decreases, the amount of readily-oxidizable gas needed to drive the reduction reaction increases. However, the inventors herein have determined that the molar ratios of readily-oxidizable gas disclosed herein can be used at an effective operating temperature range below about 871°C (1600°F), even below about 704°C (1300°F), with the reduction reaction still being dominated by Equation 1. This makes the present invention especially suited for reducing $NO_x$ concentrations in the off-gas of an FCCU regenerator because the temperature of the regenerator off-gas stream is typically low, below about 871°F (1600°F). It should be noted, however, that the preset invention can also effectively operate over any temperature range between 649-871°C (about 1200°F to about 1600°F).

A readily-oxidizable gas is used to drive the $NO_x$ reduction reaction. An effective amount of readily-oxidizable gas is that amount that enables the reducing agents of the present invention to effectively reduce the NOx concentration by the predetermined amount. A molar ratio of about 1:1 to about 50:1 moles of readily-oxidizable gas per mole of reducing agent is considered an effective amount of readily-oxidizable gas, preferably greater than about 10:1 1 to about 40:1, more preferably about 11:1 to about 40:1, and most preferably about 15:1 to about 30:1. The actual mole ratio employed will be dependent on such things as the temperature of the off-gas stream; the composition of the off-gas stream; the effectiveness of the injection means used for mixing the readily-oxidizable gas with the carrier gas, the reducing agent and the $NO_x$-carrying stream; and the reducing agent utilized. Thus, for a given off-gas stream, the most effective readily-oxidizable gas to reducing agent molar ratio will be in the 1:1 to 50:1 range. The injection of readily-oxidizable gas at rates yielding readily-oxidizable gas to reducing agent molar ratios greater than 10:1 1 is, in part, made necessary by the low oxygen concentration found in process streams such as the regenerator off-gas. For example, such streams typically contain less than about 1.5% by volume of $O_2$. It should be noted that the regenerator off-gas is termed an off-gas stream instead of a combustion stream because of the low oxygen concentrations. Combustion streams typically contain greater than 1.5 vol.% oxygen.

Since the amount of readily-oxidizable gas and reducing agent used are typically a small percentage of the regenerator off-gas flow, typically less than about 0.5% by volume, based on the volume of the stream, it is preferred to use only an effective amount of a readily available and relatively inexpensive carrier material. Non-limiting examples of carrier materials include air and steam; however, any carrier material that does not have a deleterious effect on $NO_x$ reduction, or which itself contributes to undesirable emissions, can be used. Thus, it is contemplated to mix effective amounts of reducing agent and/or readily-oxidizable gas prior to mixing with a carrier material, or within the line that contains the carrier material. It is preferred that the reducing agent/readily-oxidizable gas mixture be injected into the line that conducts the carrier material.

By an effective amount of carrier material, it is meant an amount of carrier material that will adequately mix the reducing agent and the readily-oxidizable gas with the off-gas stream, i.e., maximize the contact of the two reagents with the $NO_x$ sought to be reduced.

As previously stated, the regenerator off-gas also typically contains catalyst fines. These catalyst particles may be removed from the regenerator off-gas by any suitable means known in the art. However, the presence of catalyst fines in the regenerator off-gas is believed to assist the $NO_x$ reduction reaction. Thus, the presence of some catalyst fines, although not necessary for the practice of the instant invention, is preferred to assist the $NO_x$ reduction reaction and reduce the amount of readily oxidizable gas that is needed.

In one embodiment of the present invention, effective amounts of a reducing agent and a readily-oxidizable gas, preferably with an effective amount of carrier material, are injected directly into the regenerator's existing overhead line. Thus, the existing overhead line functions as the reaction zone for the $NO_x$ reduction reaction, thereby eliminating the need to add costly processing equipment to effectuate the present process. The injection mixture is preferably injected at a point between the COHRU and the regenerator. It is preferred that the injection occur as near the regenerator off-gas outlet as possible so that the higher temperatures near the regenerator outlet can be utilized, thereby reducing the amount of readily-oxidizable gas needed for a desired level of $NO_x$ reduction. It is also advantageous to maximize the residence time of the reducing agent and readily-oxidizable gas in the $NO_x$ reduction reaction.

In another embodiment, at least two, preferably a plurality of, injection points are used along the regenerator overhead line. Effective amounts of a reducing agent and a readily oxidizable gas, preferably with an effective amount of carrier material, are injected through these multiple injection points, which will typically be between the COHRU and the regenerator. Preferably all injections occur simultaneously. Thus, the existing regenerator overhead line again functions as the reaction zone for the $NO_x$ reduction reaction, thereby eliminating the need to add costly processing equipment to effectuate the present process. Preferably, the simultaneous injections occur as near the regenerator off-gas outlet as possible. However, the multiple injection locations are also preferably spaced such that the appropriate residence time between locations is achieved such that the desired effect from the use of multiple injection locations is realized. As previously mentioned, it is advantageous to maximize the residence time of the reducing agent and readily-oxidizable gas in the overhead line to complete the reaction.

The above description is directed to several preferred means for carrying out the present invention. Those skilled in the art will recognize that other means, which are equally effective, lie within the scope of the appended claims.

## EXAMPLES

The following examples will illustrate the effectiveness of the present process, but are not meant to limit the present invention.

## EXAMPLE 1

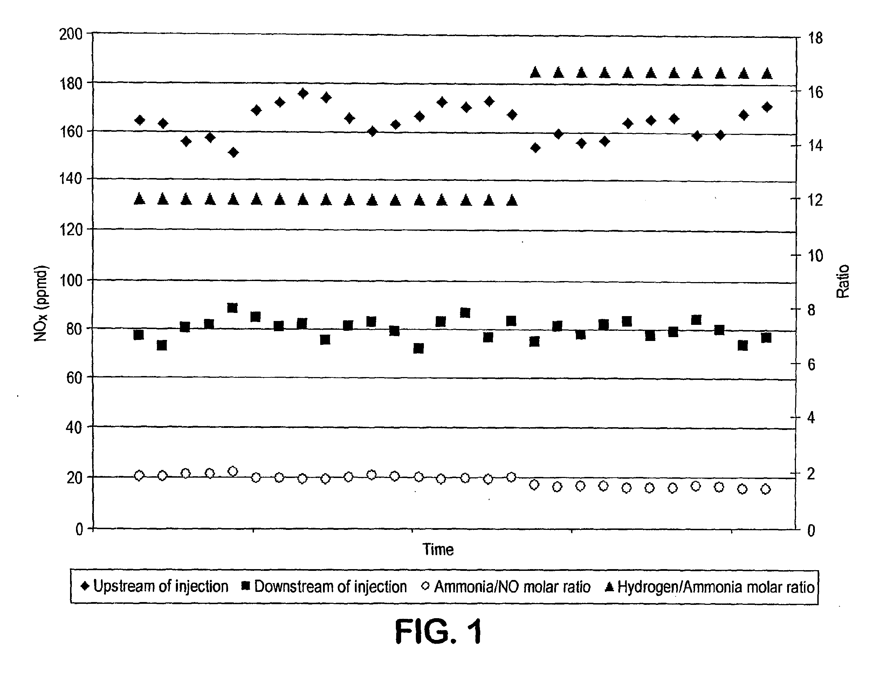

The present $NO_x$ reducing process was tested at a commercial FCCU, and the results are shown in Figure 1 hereof. Initial tests show that the injection of ammonia and hydrogen in a non-catalytic environment can be effective to reduce the $NO_x$ concentration by up to about 50% by volume. However, $NO_x$ reductions of up to 90% can theoretically be achieved.

Off-gas from a commercial FCCU regenerator was tested to determine its chemical composition. These tests revealed that the composition of the regenerator off gas as tested was approximately 0.8% $O_2$ by volume, 18% $H_2O$ by volume, 165 vppm NO, 700 vppm $SO_2$, and 25 vppm CO with the balance being $N_2$ and $CO_2$. The temperature of the off-gas at the injection point was approximately 721°C (1330°F). Ammonia and hydrogen were injected with steam in various ratios at a point as close to the outlet of the regenerator as was practical. The reduction in the concentration of $NO_x$ was then measured. The results of this experiment can be seen in Figure 1. The reduction in $NO_x$ of 55% by volume was achieved with a $NH_3$:NO volume ratio of approximately 1.5, and a $H_2$:$NH_3$ volume ratio of 15.

## EXAMPLE 2

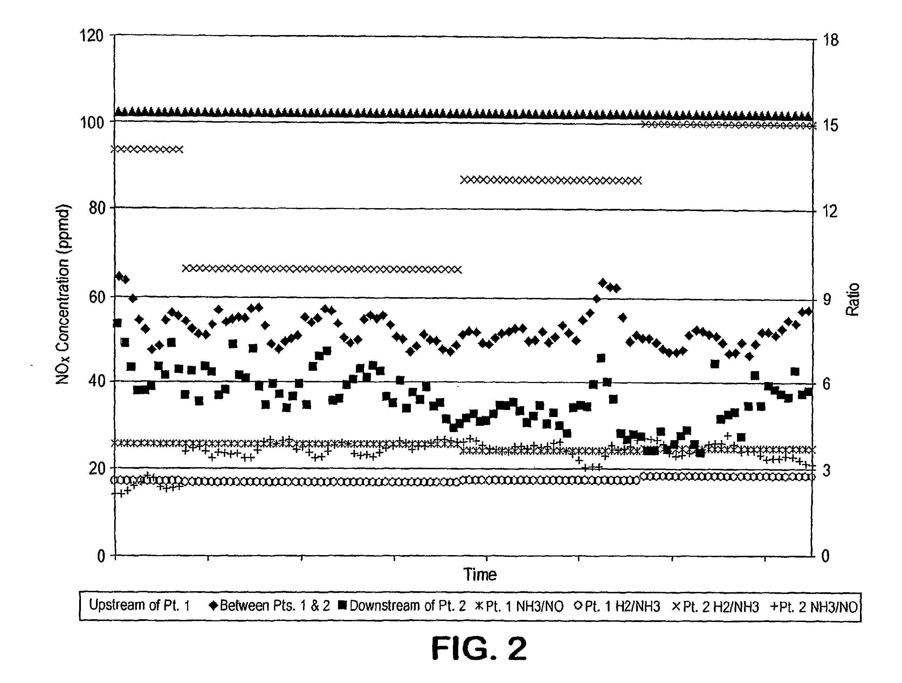

The present $NO_x$ reducing process was tested in a commercial FCCU, with ammonia and hydrogen injected at two locations. The results are shown in Figure 2 hereof Initial tests show that the injection of ammonia and hydrogen at multiple locations in a non-catalytic environment can be effective to reduce the $NO_x$ concentration by up to about 60% by volume. However, $NO_x$ reductions of up to 90% can theoretically be achieved. Off-gas from a commercial FCCU regenerator was tested to determine its chemical composition. These tests revealed that the composition of the regenerator off-gas as tested was approximately 0.8% $O_2$ by volume, 18% $H_2O$ by volume, 100 vppm NO, 700 vppm $SO_2$ and 25 vppm CO with the balance being $N_2$ and $CO_2$. The temperature of the off-gas at the injection point was approximately 743°C (1370°F). Ammonia and hydrogen were injected with steam in various ratios at a point as close to the outlet of the regenerator off-gas as was practical and at a second point approximately one second downstream of the first injection point in terms of residence time. The reduction in the concentration of $NO_x$ was then measured. The $NO_x$ upstream of the first injection point was estimated by averaging the $NO_x$ measured in the regenerator overhead line when no ammonia or hydrogen was injected. The results of this experiment can be seen in Figure 2. The reduction in $NO_x$ of 60% by volume was achieved with a $NH_3$:NO volume ratio of approximately 3.5 at both injection points, and a $H_2$:$NH_3$ volume ratio of 3 at the first injection point and 15 at the second point. It is believed that the low $H_2$:NH3 utilized at the first injection point during this test is effective at such a low temperature of 743°C (1370°F) due to a significant promotion of the $NO_x$ reduction reaction by the high concentration of catalyst fines at the regenerator outlet.

## Claims

1. A non-catalytic process for reducing the $NO_x$ concentration in the regenerator off-gas stream of a fluidized catalytic cracking unit, comprising:

   a) forming a mixture of a reducing agent selected from ammonia, urea and mixtures thereof, and a readily-oxidizable gas in effective amounts that will result in the reduction of the $NO_x$ concentration of said regenerator off-gas stream by a predetermined amount ; and
   b) injecting said mixture into said off-gas stream at a point wherein said regenerator off-gas stream is at a temperature below about 871°C (1600°F).

2. The process of claim 1 wherein said readily-oxidizable gas is selected from the group consisting of paraffinic, olefinic and aromatic hydrocarbons and mixtures thereof, gasoline, fuel oil, oxygenated hydrocarbons, formic and oxalic acids, nitrogenated hydrocarbons, sulfonated hydrocarbons, carbon monoxide, and hydrogen.

3. The process according to claim 2 wherein said reducing agent is ammonia.

4. The process according to claim 1 wherein said reducing agent is injected in a molar ratio of about 0.5 to about 12 moles per mole of $NO_x$.

5. The process according to claim 4 wherein said mixture comprises said readily-oxidizable gas and said reducing agent in a molar ratio of about 1:1 to about 50:1 moles of readily-oxidizable gas per mole of reducing agent.

6. The process according to claim 4 wherein said reducing agent and readily-oxidizable gas are injected with a carrier material such as steam or air.

7. The process according to claim 6 wherein catalyst fines from the regenerator are present in the regenerator off-gas.

8. The process according to claim 7 wherein said mixture is injected into said regenerator off-gas at a point between the regenerator and a carbon monoxide combustion/heat recovery unit (COHRU).

9. The process of claim 1 wherein said predetermined amount is a reduction of $NO_x$ in said off-gas stream by more than about 30 vol.%.

10. The process of any of the preceding claims, wherein the molar ratio of the readily-oxidizable gas to the reducing agent is 11:1 to 40:1.

11. The process of claim 10, wherein the molar ratio of the readily-oxidizable gas to the reducing agent is 15:1 to 30:1

12. The process of claim 1, wherein the $NO_x$ concentration in the effluent of said regenerator off-gas stream is reduced.

13. The process according to claim 12 wherein said mixture is injected through said at least two injection points simultaneously.

14. The process according to claim 13 wherein said mixture is injected into said off-gas stream through a plurality of injection points.

**Patentansprüche**

1. Nicht-katalytisches Verfahren zur Reduktion der $NO_x$-Konzentration im Regeneratorabgasstrom einer katalytischen Wirbelschicht-Crackanlage, bei dem

 a) eine Mischung aus einem Reduktionsmittel ausgewählt aus Ammoniak, Harnstoff und Mischungen davon und einem leicht oxidierbaren Gas in wirksamen Mengen gebildet wird, die zur Reduktion der $NO_x$-Konzentration des Regeneratorabgasstroms um eine festgelegte Menge führen, und
 b) die Mischung an einem Punkt in den Abgasstrom injiziert wird, an dem sich der Regeneratorabgasstrom auf einer Temperatur unter etwa 871°C (1600°F) befindet.

2. Verfahren nach Anspruch 1, bei dem das leicht oxidierbare Gas ausgewählt ist aus der Gruppe bestehend aus paraffinischen, olefinischen und aromatischen Kohlenwasserstoffen und Mischungen davon, Benzin, Brennstofföl, Sauerstoff enthaltenden Kohlenwasserstoffen, Ameisen- und Oxalsäuren, stickstoffhaltigen Kohlenwasserstoffen, sulfonierten Kohlenwasserstoffen, Kohlenmonoxid und Wasserstoff.

3. Verfahren nach Anspruch 2, bei dem das Reduktionsmittel Ammoniak ist.

4. Verfahren nach Anspruch 1, bei dem das Reduktionsmittel in einem Molverhältnis von etwa 0,5 bis etwa 12 Mol pro Mol $NO_x$ injiziert wird.

5. Verfahren nach Anspruch 4, bei dem die Mischung das leicht oxidierbare Gas und das Reduktionsmittel in einem Molverhältnis von etwa 1:1 bis etwa 50:1 Mol leicht oxidierbares Gas pro Mol Reduktionsmittel enthält.

**6.** Verfahren nach Anspruch 4, bei dem das Reduktionsmittel und das leicht oxidierbare Gas mit einem Trägermaterial, wie Wasserdampf oder Luft, injiziert werden.

**7.** Verfahren nach Anspruch 6, bei dem Katalysatorfeinteilchen aus dem Regenerator in dem Regeneratorabgas vorhanden sind.

**8.** Verfahren nach Anspruch 7, bei dem die Mischung an einem Punkt zwischen dem Regenerator und einer Kohlenmonoxidverbrennungs-/Wärmerückgewinnungsanlage (COHRU) in das Regeneratorabgas injiziert wird.

**9.** Verfahren nach Anspruch 1, bei dem die festgelegte Menge eine Reduktion von $NO_x$ in dem Abgasstrom um mehr als etwa 30 Vol.% ist.

**10.** Verfahren nach einem der vorhergehenden Ansprüche, bei dem das Molverhältnis des leicht oxidierbaren Gases zu dem Reduktionsmittel 11:1 bis 40:1 beträgt.

**11.** Verfahren nach Anspruch 10, bei dem das Molverhältnis des leicht oxidierbaren Gases zu dem Reduktionsmittel 15:1 bis 30:1 beträgt.

**12.** Verfahren nach Anspruch 1, bei dem die $NO_x$-Konzentration in dem Ausfluss des Regeneratorabgasstroms reduziert wird.

**13.** Verfahren nach Anspruch 12, bei dem die Mischung durch mindestens zwei Injektionsöffnungen gleichzeitig injiziert wird.

**14.** Verfahren nach Anspruch 13, bei dem die Mischung durch mehrere Injektionspunkte in den Abgasstrom injiziert wird.

**Revendications**

**1.** Procédé non catalytique de réduction de la concentration de $NO_x$ dans le courant de gaz d'échappement du régénérateur d'une unité de craquage catalytique en lit fluidisé, comprenant les étapes consistant à :

a) former un mélange d'un agent réducteur choisi parmi l'ammoniac, l'urée et leurs mélanges, et d'un gaz facilement oxydable en quantités efficaces pour permettre la baisse, d'une quantité prédéterminée, de la concentration de $NO_x$ dans ledit courant de gaz d'échappement du régénérateur ;et
b) injecter ledit mélange dans ledit courant de gaz d'échappement en un point où ledit courant de gaz d'échappement du régénérateur est à une température inférieure à environ 871°C (1600°F).

**2.** Procédé selon la revendication 1, dans lequel ledit gaz facilement oxydable est choisi dans le groupe constitué par les hydrocarbures paraffiniques, oléfiniques et aromatiques, et leurs mélanges, l'essence, le gazole, les hydrocarbures oxygénés, les acides formique et oxalique, les hydrocarbures azotés, les hydrocarbures sulfonés, le monoxyde de carbone et l'hydrogène.

**3.** Procédé selon la revendication 2, dans lequel ledit agent réducteur est l'ammoniac.

**4.** Procédé selon la revendication 1, dans lequel ledit agent réducteur est injecté dans un rapport molaire d'environ 0,5 à environ 12 moles par mole de $NO_x$.

**5.** Procédé selon la revendication 4, dans lequel ledit mélange comprend ledit gaz facilement oxydable et ledit agent réducteur dans un rapport molaire d'environ 1/1 à environ 50/1 moles de gaz facilement oxydable par mole d'agent réducteur.

**6.** Procédé selon la revendication 4, dans lequel ledit agent réducteur et ledit gaz facilement oxydable sont injectés avec un matériau porteur tel que de la vapeur d'eau ou de l'air.

**7.** Procédé selon la revendication 6, dans lequel les fines de catalyseur provenant du régénérateur sont présentes dans le gaz d'échappement du régénérateur.

**8.** Procédé selon la revendication 7, dans lequel ledit mélange est injecté dans ledit gaz d'échappement du régénérateur en un point situé entre le régénérateur et une unité de combustion du monoxyde de carbone/récupération de chaleur (COHRU).

**9.** Procédé selon la revendication 1, dans lequel ladite quantité prédéterminée est une baisse de $NO_x$ dans ledit courant de gaz d'échappement qui est supérieure à environ 30% en volume.

**10.** Procédé selon l'une quelconque des revendications précédentes, dans lequel le rapport molaire entre le gaz facilement oxydable et l'agent réducteur est de 11/1 à 40/1.

**11.** Procédé selon la revendication 10, dans lequel le rapport molaire entre le gaz facilement oxydable et l'agent réducteur est de 15/1 à 30/1.

**12.** Procédé selon la revendication 1, dans lequel la concentration de $NO_x$ dans l'effluent dudit courant de gaz d'échappement du régénérateur est abaissée.

**13.** Procédé selon la revendication 12, dans lequel ledit mélange est injecté simultanément par lesdits au moins deux points d'injection.

**14.** Procédé selon la revendication 13, dans lequel ledit mélange est injecté dans ledit courant de gaz d'échappement par une pluralité de points d'injection.

FIG. 1

EP 1 517 739 B1

FIG. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3900554 A, Lyon
- US 4507269 A, Dean
- US 4115515 A, Tenner
- US 4636370 A
- US 4624840 A
- US 4682468 A
- US 4208386 A, Arand
- US 4434147 A
- US 5846403 A, Swan

**Non-patent literature cited in the description**

- **Kim ; Lee.** *Journal of Chemical Engineering of Japan,* 1996